# EUROPEAN PATENT SPECIFICATION

(11) **EP 1 856 836 B1**
(45) Date of publication and mention of the grant of the patent: **27.08.2014**
(21) Application number: 06723426.0
(22) Date of filing: 09.03.2006
(51) Int. Cl.: H04L 9/08

(54) **NETWORK ASSISTED TERMINAL TO SIM/UICC KEY ESTABLISHMENT**
NETZWERKUNTERSTÜZTE SCHLÜSSELFESTLEGUNG VON ENDGERÄT ZU SIM-UICC
TERMINAL ASSISTE PAR RESEAU PERMETTANT D'ETABLIR UNE CLE SIM/UICC

(30) Priority: 11.03.2005 US 661110 P; 13.10.2005 US 250113
(43) Date of publication of application: 21.11.2007
(73) Proprietor: Telefonaktiebolaget L M Ericsson (publ), 164 83 Stockholm (SE)
(72) Inventor: GEHRMANN, Christian, S-227 38 Lund (SE)
(74) Representative: Åkerman, Mårten Lennart
(86) International application number: PCT/EP2006/002349
(87) International publication number: WO 2006/094838

(56) References cited:
- EP-A- 1 513 040
- US-A- 6 023 689
- US-A1- 2003 220 096
- US-A1- 2004 157 584
- US-B1- 6 504 932

## Description

### BACKGROUND OF THE INVENTION

### Field of the Invention

The present invention relates to a method for establishing a secret that is shared between a mobile device and a smart card (SIM or UICC). In particular, the method utilizes a cellular network operator to perform a key exchange that is necessary to establish the shared secret which is then used to protect an interface between the mobile device and the smart card.

### Description of Related Art

The following abbreviations are herewith defined, at least some of which are referred to in the ensuing description of the prior art and the present invention.

### 3GPP Third Generation Partnership

- AVEC: Authentication Vector
- BSF: Bootstrapping Server Function
- B-TID: Bootstrapping Transaction Identifier
- CMLA: Content Management License Administrator
- DRM: Digital Right Management
- GAA: Generic Authentication Architecture
- GSM: Global System for Mobile Communications
- GBA: Generic Bootstrapping Architecture
- HSS: Homes Subscriber Server
- IMEI: Terminal Identity
- KID: Key Identifier
- MAC: Message Authentication Code
- PC: Personal Computer
- PDA: Personal Digital Assistant
- RAND: Random Challenge
- SIM: Subscriber Identity Module
- SKMN: Subscriber Key Management Node
- TE: Mobile Device
- TID: Terminal Identity
- UE: User Equipment
- UICC: UMTS Integrated Circuit Card
- UIM: User Identity Module
- UMTS: Universal Mobile Telecommunications System

Mobile operators typically consider a smart card (e.g., SIM, UICC) as being a key component in their business. Consequently, mobile operators have been developing and promoting the extended usage of the smart card. However, the security of smart card is dependent on the device holding the card, i.e., the mobile device, and currently the interface between the mobile device and the smart card is not protected. This is a problem especially in applications like the two discussed below where the main threat happens to be the mobile user.

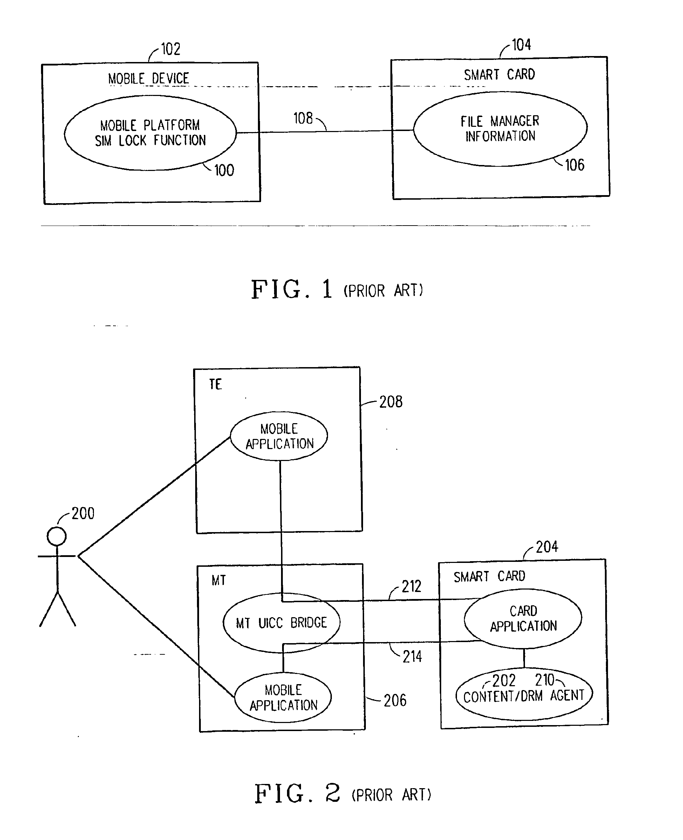

One such application involves a SIM lock function. As shown in FIGURE 1 (PRIOR ART), the SIM lock function 100 is a feature in a GSM/UMTS mobile device 102 that allows a mobile operator (not shown) to "lock" the mobile device 102 to a particular network and/or a particular smart card 104 (e.g., SIM 104, UICC 104). To make a check of the smart card 104, the mobile device 102 needs to read configuration information 106 stored in the smart card 104. And, since the interface 108 between the mobile device 102 and the smart card 104 is not protected. This means that the interface 108 is vulnerable to attacks, which if successful can trick the mobile device 102 into thinking that a fraudulent smart card (and consequently another network) which happens to be an authorized smart card 104. This is not desirable.

For a more detailed discussion about the SIM lock function, reference is made to the following document:
- 3GPP TS 22.016: "3GPP Personalization of ME".

The contents of this document are incorporated by reference herein.

Another application is associated with DRM, which involves the protection of content from illegal usage and reproduction. Referring to FIGURE 2 (PRIOR ART), there is a typical scenario shown where the DRM could be used in which a user 200 would like to move protected content 202 that is stored in the smart card 204 (e.g., SIM 204, UICC 204) from one mobile device 206 (shown as MT 206) to another mobile device 208 (shown as TE 208). The DRM is based on mechanisms that allow a piece of the content 202 to be linked to a rights object which contains usage rules and/or keys needed to display or play the protected content 202. The rights object is handled by a DRM agent 210, which is typically implemented in part or whole within the smart card 204. If this is the case, then the clear text content 202 and/or rights objects information needs to be transferred from the smart card 204 to TE 208 via the MT 206. This puts security requirements on the interfaces 212 and 214 between the smart card 204 and the MT 206 and TE 208. And, since the interfaces 212 and 214 are not protected this means that the content 202 could be accessed and copied by an unauthorized device (not shown). This is not desirable. For a more detailed discussion about DRM, reference is made to the following document:
- Vodafone, Ericsson and Gemplus, "Use Case Description for UICC-ME Interface Project", Ver. 0.5, January 2005.

The contents of this document are incorporated by reference herein.

As can be seen, in the current state of the art there can be a problem when there is an unprotected interface between the mobile device and the smart card. This problem and other problems are solved by the present invention.

### BRIEF DESCRIPTION OF THE INVENTION

The present invention is related to a method that enables a mobile device and a smart card (e.g., SIM, UICC, or any other smart cards) to establish a shared secret KE which can then be used to secure an interface between themselves. A mobile operator helps in the establishment of the shared secret (KE) by taking part in a key exchange between the mobile device and smart card. The mobile operator's involvement is desirable since they can keep track of mobile device-smart card pairs and if necessary they can block the security establishment between the mobile device and the smart card in order to prevent fraudulent behavior.

### BRIEF DESCRIPTION OF THE DRAWINGS

A more complete understanding of the present invention may be had by reference to the following detailed description when taken in conjunction with the accompanying drawings wherein:
FIGURE 1 (PRIOR ART) is a block diagram that is used to help describe a problem with a SIM lock function which is solved by the present invention;
FIGURE 2 (PRIOR ART) is a block diagram that is used to help describe a problem with DRM which is solved by the present invention;
FIGURE 3 is a flow diagram that is used to help describe the steps of a method for establishing a secret key that can be used to secure an interface between a mobile device and a smart card in accordance with a first embodiment of the present invention;
FIGURE 4 is a flow diagram that is used to help describe the existing GSM authentication/key generation process that can be used by the method shown in FIGURE 3 in accordance with the present invention; and
FIGURE 5 is a flow diagram that is used to help describe the existing UMTS authentication/key generation process that can be used by the method shown in FIGURE 3 in accordance with the present invention; and
FIGURE 6 is a flow diagram that is used to help describe the steps of a method for establishing a secret key that can be used to secure an interface between a mobile device and a smart card in accordance with a second embodiment of the present invention.

### DETAILED DESCRIPTION OF THE DRAWINGS

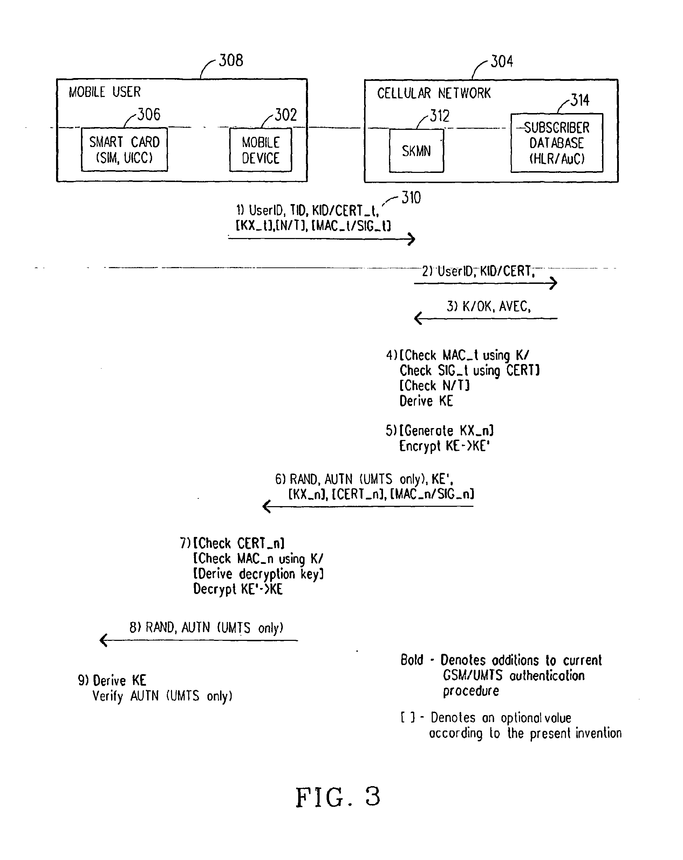

The present invention relates to a method for establishing a shared secret between a mobile device and a smart card (which contains a SIM or USIM application). In particular, the present invention relates to a method that utilizes a cellular network operator (and subscriber database) to perform a key exchange that is necessary to establish the shared secret between the mobile device and the smart card (SIM or UICC). To help accomplish this, the method utilizes a key generation function associated with the existing GSM/UMTS authentication standards. A step-by-step description of one embodiment of the present invention is provided next with respect to FIGURE 3.

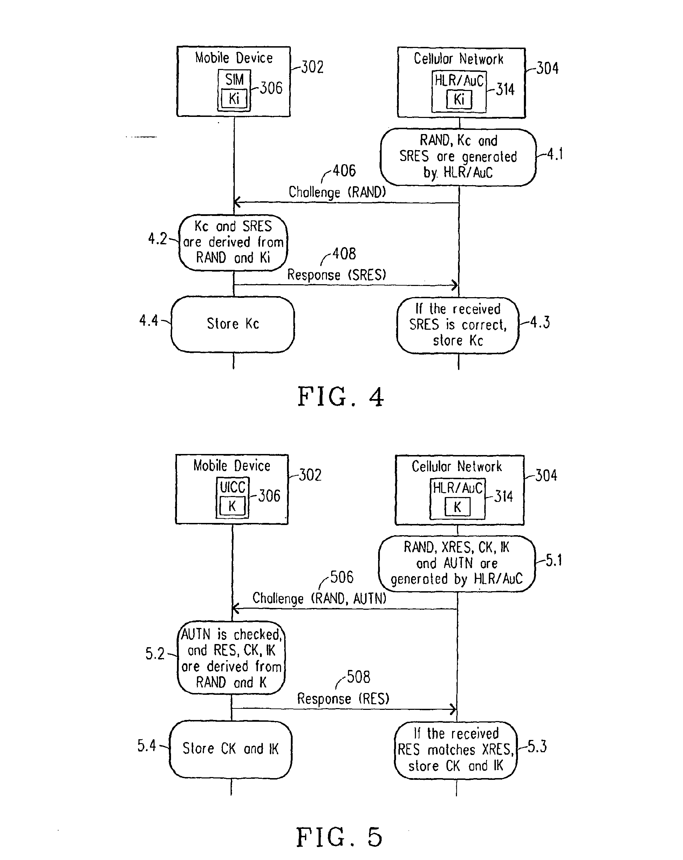

Referring to FIGURE 3, there is a signal flow diagram illustrating a step-by-step description of the key exchange method in accordance with a first embodiment of the present invention. In this embodiment, it is assumed that the mobile device 302 has accessed and is attached to the cellular network 304. This means that the mobile device 302 has been authenticated to the cellular network 304 and is using an attached smart card 306, which contains a SIM or USIM application. A mobile user 308 is associated with the mobile device 302 and the smart card 306. The steps are as follows:
(1) The mobile device 302 sends a pairing request message 310 to a dedicated node 312 in the cellular network 304. In this example, the dedicated node 312 is called the Subscriber Key Management Node (SKMN) 312 and it can use any suitable protocol like, for example, http/TCP/IP. As shown, the pairing request message 310 contains the following payload: subscription identity (UserID), terminal identity (TID), a key identifier (KID) or a certificate (CERT_t). If the certificate (CERT_t) is added, then it could be a CMLA certificate (see CMLA technical specification, www.cm-la.com). If desired, some key exchange information (KX_t) like a Diffie-Helman public key, g^{x}, can be added. Also, a random nonce or time stamp value (N/T) could be added. And, it is also possible to add some integrity protection data like a Message Authentication Code (MAC_t) or a digital signature (SIG_t) which can be calculated over certain parts or all of the data. In case the MAC is added, then the MAC could be calculated by using the key corresponding to KID. It should be appreciated that the TID and KID could be identical and if this is the case then only one ID needs to be sent from the mobile device 302 to the network 304.
(2) The SKMN 312 contacts a subscriber database 314 and sends the UserID and the KID or CERT_t to the subscriber database 314.
(3) The subscriber database 314 generates and sends the SKMN 312 an authentication vector (AVEC) (UMTS or GMS) that includes among other information a random challenge RAND. The SKMN 312 also receives either a key, K, corresponding to KID or it receives an OK check of the certificate given to the subscriber database 314.
(4) If step 3 was successfully performed, then the SKMN 312 checks (if applicable) the MAC_t received in step 1 using the key, K, corresponding to KID, or it checks (if applicable) the signature SIG_t using the verified CERT. In addition, the SKMN 312 might also check the nonce/time stamp N/T against information stored therein or in the subscriber database 314). This check can be performed such that the SKMN 312 checks that the same or lower value than the received N/T has not been used before for the particular TID or User ID. After this, the SKMN 312 derives a shared encryption key KE (related to the GSM/UMTS encryption key and/or integrity key (UMTS case)) using the existing GSM/UMTS authentication standards (see FIGURES 4 and 5).
(5) If a certificate was received in step 1, then the SKMN 312 might encrypt the KE to KE' using the public key in this certificate. Another option is to generate SKMN Key exchange information (KX_n) like a Diffie-Hellman public key, g^{y}, and then use this information to encrypt KE as KE'. In either case, the SKMN 312 encrypts the KE to form KE'.
6) The SKMN 312 sends a GSM random challenge, RAND, or UMTS RAND and AUTN (received in step 3 as part of the authentication vector AVEC) to the mobile device 302. In addition, the SKMN 312 also sends the encrypted key KE', the key exchange information (KX_n)(if applicable), the nonce or time stamp value received in step 2 (if applicable), a SKMN certificate (CERT_n) (if applicable), and a MAC (MAC_n) or signature (SIG_n) that are calculated over all or certain parts of the data (if applicable). If the MAC is sent, then it is calculated by using key K.
(7) If applicable, the mobile device 302 verifies the SIG_n or MAC_n and if the check is OK it then proceeds with decrypting the value KE' either using its own private key or by using the KX_t and KX_n. It is important to note that the mobile device 302 does not derive the shared key KE by using the existing GSM/UMTS authentication standards instead it decrypts the KE' that was sent to it from the SKMN 312. At this point, the SKMN 312 and the mobile device 302 each have the shared key KE.
(8) The mobile device 302 sends the RAND (in GSM case) or the RAND and AUTN (in UMTS case) to the smart card 306.
(9) The smart card 306 then calculates the shared key KE using the existing GSM/UMTS authentication standards. At this point, the mobile device 302 and the smart card 306 now share a secret KE (verified by the cellular network 304) which is used to protect the interface between themselves. Like the SKMN 312, the smart card 306 derives the shared encryption key KE (which is related to the GSM/UMTS encryption key and/or integrity key (UMTS case)) by using the existing GSM/UMTS authentication standards. A brief discussion about these standards is provided next with respect to FIGURES 4 and 5.

First, a discussion is provided about how the cellular network 304 and the smart card 306 when configured in accordance with GSM can each use the existing GSM authentication standard to derive the shared encryption key KE (discussed below as shared secret Kc). As shown in FIGURE 4, the GSM authentication process is based on a 128-bit secret key, Ki, which is stored in the SIM smart card 306. The cellular network 304 stores the secret key Ki in the subscriber database 314 (shown as the HLR/AuC 314). The HLR/AuC 314 uses the Ki to derive the authentication vector AVEC which in this case is known as a triplet (see box 4.1 and step 3 in FIGURE 3). Each triplet is composed of:
- RAND: 128-bit random number, to be used as a challenge.
- Kc: 64-bit long key, intended to be used as an encryption key over the air interface.
- SRES: 32-bit response to the challenge.

Once the cellular network 304 has the authentication vector AVEC, it uses the RAND to generate the Kc (which is related to the shared key KE). Then, the cellular network 304 challenges the mobile device 302 with the RAND (see signal 406 and step 6 in FIGURE 3). The mobile device 302 then forwards the RAND to the SIM card 306 (see step 8 in FIGURE 3) which generates the Kc using the received RAND and the internally stored Ki (see box 4.2 and step 9 in FIGURE 3). The mobile device 302 sends a response SRES to the cellular network 304 (see signal 408). In response, the cellular network 304 checks the correctness of the response SRES (see box 4.3). If the received SRES is correct, then the-cellular- network 304 stores the Kc. The SIM card 306 also stores the Kc (see box 4.4). At this point, the cellular network 304 and the SIM smart card 306 each have the shared secret Kc. In the preferred embodiment, the encryption key KE=Kc. But, the KE can be in any form that is related to Kc. For instance, one could set KE=Kc+SRES in order to have 9.6 bits of protection. For a more detailed discussion about the GSM authentication process, reference is made to the following document:
- 3GPP TS 43.020 v.5.0.0 "Security Related Network Functions (Release 5)", July 2002.

The contents of this document are incorporated by reference herein.

Second, a discussion is provided about how the cellular network 304 and the smart card 306 when configured in accordance with UMTS can each use the existing UMTS authentication standard to derive a shared encryption key KE (discussed below as shared secret CK | IK). As shown in FIGURE 5, the UMTS authentication process is similar to the GSM authentication process, but the UMTS authentication process has some additional security mechanisms:
- The mobile device 302 is assured that the mobile operator (not shown) is the claimed one.
- An additional key IK is derived and used to ensure integrity protection over the air interface.
- Longer keys and response values are used for increased security.

As in the GSM authentication process, there is a 128-bit secret key, K, which is stored in the UICC 402. The cellular network 304 stores the secret key K in the subscriber database 314 (shown as the HLR/AuC 314). The HLR/AuC 314 uses the secret key K to derive the authentication vector AVEC which is known as a quintet (see box 5.1 and step 3 in FIGURE 3). Each quintet is composed of:
- RAND: 128-bit random number, to be used as a challenge.
- XRES: 32 bit to 128 bit response to the challenge.
- CK: 128-bit long key, to be used as a cipher key over the air interface.
- IK: 128-bit long key, to be used as an integrity key over the air interface.
- AUTN: 128-bit value, used for network authentication.

Once the cellular network 304 has the authentication vector AVEC, it challenges the mobile device 302 with the RAND and AUTN values from the quintet (see signal 506 and see step 6 in FIGURE 3). The mobile device 302 then forwards the RAND and AUTN to the UICC 306 (see step 8 in FIGURE 3). In response, the UICC 306 checks that the AUTN is correct, and then it generates RES, CK and IK, using the received RAND and the internally stored K (see box 5.2 and step 9 in FIGURE 3). The mobile device 302 then sends a response RES to the cellular network 304 (see signal 508). The cellular network 304 then checks the correctness of the response RES (see box 5.3). If the received RES is correct, then the cellular network 304 stores CK and IK. The UICC 306 also stores CK and IK (see box 5.4). At this point, the cellular network 304 and the UICC 306 each have shared secrets CK and IK. In the preferred embodiment, the shared key KE=CK|IK, where | denotes a concatenation of the two key values. However, the shared key KE can be related to any variation of the shared secrets CK and IK. For a more detailed discussion about the UMTS authentication process, reference is made to the following document:
- 3GPP TS 33.102: "3G Security Architecture (release 6)" Sept. 2003.

The contents of this document are incorporated by reference herein.

To further exemplify the usage of the present invention, a description is provided next about another embodiment of the key exchange method that involves an extension to the existing 3GPP GBA (Generic Bootstrap Architecture) procedure/standard. The existing 3GPP-GBA procedure allows the known UMTS authentication and key derivation functions to be used to "bootstrap" shared secrets for more general purposes (such as web authentication etc.). And, the existing 3GPP GBA standard enables two different basic key bootstrap procedures, one terminal based (works without UICC card upgrade) and one UICC based (works only with upgraded UICC cards). For a detailed description about the existing 3GPP GBA procedure, reference is made to the following document:
- 3GPP TS 33.220: "Generic Authentication Architecture (GAA); Generic Bootstrapping Architecture".

The contents of this document are incorporated by reference herein.

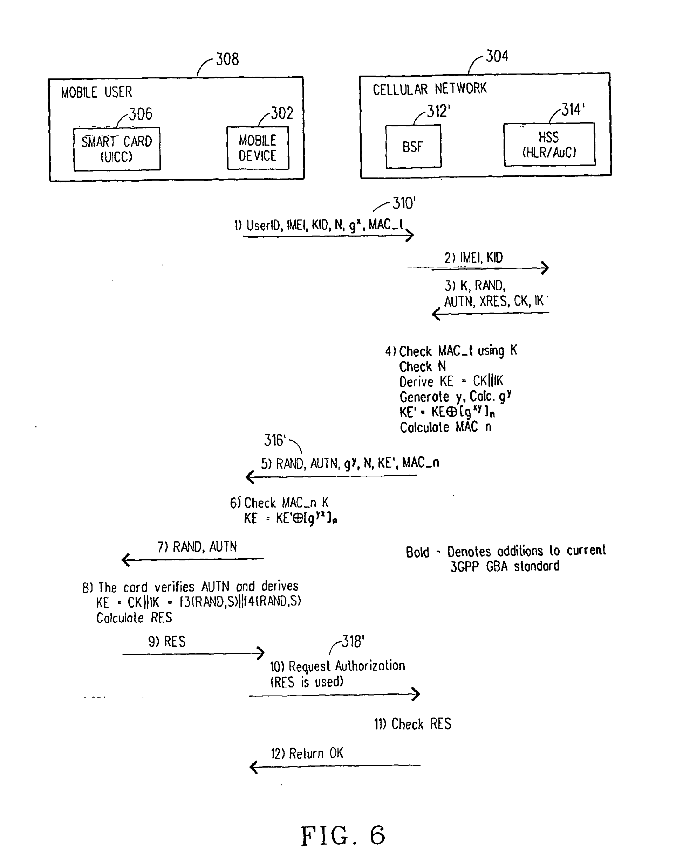

However, the existing 3GPP GBA procedure does not provide any method to bootstrap a shared secret between the mobile device 302 and smart card 306. This is solved by the present invention as described next with respect to FIGURE 6.

Referring to FIGURE 6, there is a signal flow diagram illustrating a step-by-step description of the key exchange method in accordance with a second embodiment of the present invention. In this embodiment, it is assumed that the mobile operator and the mobile device manufacturer have agreed that one particular mobile platform (software/hardware/standard) is to be considered trusted and as an evidence of this a unique secret value K is stored securely in the cellular network 304 (the HSS 314') and the smart card 306. The secret value K is identified through the key identifier, KID. The steps are as follows:
(1) The mobile device 302 sends a pairing request message 310' to a BSF 312' located in the cellular network 304. As shown, the pairing request message 310' contains the following payload: subscription identity (UserID), terminal identity (IMEI), a key identifier (KID), a Diffie-Helman public key, g^{x}, a random nonce (N) and a MAC value (MAC_t). The MAC is calculated as MAG_t=H(UserID∥IMEI∥KID∥g^{x}|N,K), where H is a suitable MAC function such as HMAC and K is the secret value corresponding to the identity KID. For a detailed discussion about HMAC, reference is made to the following document:
   - H. Krawczyk, M. Bellare and R. Canetti, "HMAC: Keyed-Hashing for Message Authentication", RFC 2104, February 1997.
   The contents of this document are incorporated by reference herein.
(2) The BSF 312' contacts the HSS 314' and sends it a request with the following parameters: IMEI and KID.
(3) The HSS 314' fetches a UMTS authentication quintuple including RAND, AUTN, XRES, CK, IK for the mobile user 308 as well as the platform key K and sends these parameters back to the BSF 312'. However, before this is done, the HSS 314' checks to see if the UserID is blocked in the cellular network 304. And, if the UserID is blocked then the HSS 314' will not send this data to the BSF 312'.
(4) The BSF 312' checks the received MAC_t value using the key K. Next, the BSF 312' checks if the IMEI number is blocked and if it is then the BSF 312' does not proceed with the bootstrapping procedure. The BSK 312' also checks if the nonce N has been used together with the received IMEI number before. If it has then the bootstrapping procedure is aborted (or an error is sent to the mobile device 302). Next, the BSF 312' calculates a shared key KE as a concatenation of CK and IK, KE = CK∥IK, where CK and IK are the UMTS encryption and integrity keys respectively (see FIGURE 5). A Diffie-Hellman secret, y, and public values, g^{y}, are then generated and calculated respectively. The seccet Diffie-Hellman value is then used to calculate the Diffie-Hellman secret as g^{xy}. This value is then truncated to the size of shared key KE, [g^{xy}]ₙ. Next, the shared key KE is encrypted as KE' = KE⊕[g^{xy}]ₙ. Finally, the BSF 312' calculates the MAC_n values as MAC_n = H(RAND∥AUTN∥g^{y}∥N∥KE',K).
(5) The BSF 312' then sends a request response message 316' to the mobile device 302 with the following payload: RAND, AUTN, g^{y}, N, KE', MAC_n.
(6) The mobile device 302 verfies the MAC_n value using the stored secret K. In addition, the mobile device 302 verifies that the value N is the same value as it sent in the pairing request message 310' in step 1. If these checks are OK, then the mobile device 302 calculates the Diffie-Hellman secret as g^{yx} and then it derives the shared key KE as KE'⊕ KE⊕[g^{yx}]ₙ). At this point, the BSF 312' and the mobile device 302 each have the shared key KE.
(7) The mobile device 302 sends the RAND and AUTN values to the UICC 306 (USIM smart card 306).
(8) The UICC 306 verifies the AUTN and derives the shared key KE as CK||IK where CK = f3(RAND,S) and IK = (f4(RAND,S) and where S is the UICC-HSS shared secret value and f4 and f5 are algorithms defined in the aforementioned 3GPP TS 33.102 standard. The UICC 306 (USIM smart card 306) also calcutates a response RES using the algorithm f2 and the secret S.
(9) The UICC 306 (USIM smart card 306) sends the response RES to the mobile device 302.
(10) The mobile device 302 sends a message 318' containing a Digest AKA response, RES to the BSF 312'.
(11) The BSF 312' checks the response RES.
(12) If step 11 was OK, then the BSF 312' sends an OK along with a GBA specific identity B-TID back to the mobile device 302. At this point, the mobile device 302 and the smart card 306 now share a secret KE (verified by the cellular network 304) which can be used to protect the interface between themselves.

It should be appreciated that the order of the steps shown in FIGURES 3 and 6 can be changed and such changes should still be considered within the scope of the present invention. For instance, the smart card 306 can derive the shared key KE before the mobile device 302 derives the shared key KE.

From the foregoing, it can be readily appreciated by those skilled in the art that the present invention allows a mobile device 302 and smart card 306 to establish a shared secret KE which is related to the GSM/UMTS encryption key and/or integrity key (UMTS case). Those skilled in the art will also appreciate that the present invention utilizes standard procedures to as large extent as possible, but new features and protections are introduced that allows the establishment of a secure key KE between the mobile device 302 and the smart card 306. In addition, those skilled in the art will appreciate that the procedure described herein is in the control of the mobile operator. Whence, the mobile operator can keep_ track of mobile device-smart card pairs and this makes it easy for the mobile operator if necessary to block the security establishment between a certain smart card (through IMSI) and a certain mobile device (through IMEI) in order to prevent fraudulent behavior.

Following are some additional features and advantages of the present invention:
(1) It should be appreciated that a shared key in accordance with ISO 7816-3, TLS protocol could be used in addition to the present invention wherein the present invention can be used to establish the shared secret between the mobile device and smart card and then the communications between the mobile device and smart card can be protected (encrypted and integrity protected) by the TLS shared key.
(2) The present invention is also more desirable than existing technology like OMA which does not establish a secure interface between the mobile device and the smart card. The OMA is briefly described as follows:
   (A) The Open Mobile Alliance (OMA) has a standardized solution (see www.openmoiblealliance.org) for copy protection of OMA content such and multimedia files. The OMA DRM v2 standard assumes a trusted DRM agent is implemented on the mobile device. The DRM agent needs to be certified and needs to identify itself using certificates issued by the CMLA organization. This means that each CMLA compliant mobile device must contain a unique private-public key pair that is certified by the CMLA organization. This scheme is not as desirable as the present invention since if the authentication is based on general mechanisms such as trusted certificates, then there is a risk that any mobile device can set-up a "secure channel" with any other UICC. And, then in practice, there will be no high security level because too large a set of mobile devices will be able to establish "trusted channels". Furthermore, the mobile operator will have no control over when and how the "secure channels" are configured between mobile devices and UICCs.
(3) It should be appreciated that each of the components described herein like the mobile device, SKMN, BSF etc. has a processor/computer/logic incorporated therein that can perform various actions in accordance with the present invention by using specialized circuits or circuitry (e.g., discrete logic gates interconnected to perform a specialized function), program instructions, or a combination of both.
(4) It should also be appreciated that the present invention can be implemented in any type of smart card including future smart cards.

Although two embodiments of the present invention have been illustrated in the accompanying Drawings and described in the foregoing Detailed Description, it should be understood that the invention is not limited to the embodiments disclosed, but is capable of numerous rearrangements, modifications and substitutions without departing from the scope of the invention as set forth and defined by the following claims.

## Claims

1. A method for establishing a shared key (KE) between a mobile device and a smart card, said method comprising the steps of:
sending, from said mobile device, a first message to a mobile operator whiich upon receiving the first message said mobile operator generates:
an encrypted shared key (KE');
a random challenge value (RAND); and
if needed, an authentication token (AUTN);
receiving, at said mobile device, a second message from said mobile operator, wherein said second message includes:
the encrypted shared key (KE');
the random challenge value (RAND); and
if present, the authentication token (AUTN);
decrypting, at said mobile device, the encrypted shared key (KE') to determine the shared key (KE);
sending, from said mobile device, a third message to said smart card, wherein said third message includes:
the random challenge value (RAND); and
if present, the authentication token (AUTN);
using, at said smart card, the random challenge value (RAND) and if present the authentication token (AUTN) to determine the shared key (KE).

2. The method of Claim 1, wherein said mobile operator, said mobile device and said smart card are configured in accordance with a GSM standard or a UMTS standard.

3. The method of Claim 1, wherein said first message includes:
a subscription identity (UserID); and
a key identifier (KID) or a certificate (CERT_t) when a terminal identity (TID) is equal to the key identifier (KID).

4. The method of Claim 1, wherein said first message includes:
a subscription identity (UserID);
a terminal identity (TID); and
a key identifier (KID) or a certificate (CERT_t).

5. The method of Claim 1, wherein said first message further includes at least one of:
key exchange information (Kx_t);
a random nonce or time stamp value (N/T); and
a message authentication code (MAC_t) or a digital signature (SIG_t).

6. The method of Claim 1, wherein said second message further includes at least one of:
key exchange information (Kx_n);
a random nonce or time stamp value (N/T);
a certificate (CERT_n); and
a message authentication code (MAC_n) or a digital signature (SIG_n).

7. The method of Claim 1, wherein when said mobile operator, said mobile device and said smart card are configured in accordance with a GSM standard then the shared key (KE) is related to a GSM encryption key (Kc) and the authentication token (AUTN) is not needed.

8. The method of Claim 1, wherein when said mobile operator, said mobile device and said smart card are configured in accordance with a UMTS standard then the shared key (KE) is related to an UMTS encryption/integrity key (CK'|K) and the authentication token (AUTN) is needed.

9. The method of Claim 1, wherein said mobile operator, said mobile device, said smart card are configured in accordance with a 3GPP Generic Bootstrap Architecture.

10. The method of Claim 1, wherein said first message includes:
a subscription identity (UserID);
a terminal identity (IMEI);
a key identifier (KID);
a Diffie-Helman public key (g^{x});
a random nonce (N); and
a message authentication code (MAC_t)

11. The method of Claim 1, wherein said second message further includes:
a Diffie-Helman public key (g^{y});
a random nonce (N); and
a message authentication code (MAC_n).

12. An arrangement comprising a mobile device and a smart card that use a mobile operator to help establish a shared key (KE) which is used to protect an interface between said mobile device and said smart card, wherein:
said mobile device comprising:
logic that sends a request message to a mobile operator and then receives:
an encrypted shared key (KE');
a random challenge value (RAND); and
if present, an authentication token (AUTN); and
logic that decrypts the encrypted shared key (KE') to determine the shared key (KE);
logic that sends said smart card the following:
the random challenge value (RAND); and
if present, the authentication token (AUTN); and
said smart card comprising:
logic that receives the following:
the random challenge value (RAND); and
if present the authentication token (AUTN); and
logic that determines the shared key (KE) using the random challenge value (RAND) and if present the authentication token (AUTN).

13. The mobile device/smart card of Claim 12, wherein when said mobile operator supports a GSM architecture then the shared key (KE) is related to a GSM encryption key (Kc) and the authentication token (AUTN) is not needed.

14. The mobile device/smart card of Claim 12, wherein when said mobile operator supports a UMTS architecture then the shared key (KE) is related to an UMTS encryption/integrity key (CKIK) and the authentication token (AUTN) is needed.

15. The mobile device/smart card of Claim 12, wherein said mobile operator supports a 3GPP Generic Bootstrap Architecture.

16. A mobile network comprising:
a node/database that receives a request message from a mobile device and then determines at least the following:
an encrypted shared key (KE');
a random challenge value (RAND); and
if needed, an authentication token (AUTN);
said node/database sends said mobile device the following:
the encrypted shared key (KE');
the random challenge value (RAND); and
if present, the authentication token (AUTN), wherein said mobile device decrypts the encrypted shared key (KE') to determine a shared key (KE), wherein said mobile device sends a smart card the random challenge value (RAND) and if provided the authentication token (AUTN), wherein said smart card uses the random challenge value (RAND) and if provided the authentication token (AUTN) to determine a shared key (KE), wherein said mobile device and said smart card use their shared keys (KEs) to protect an interface between themselves.

17. The mobile network of Claim 16, wherein when said mobile operator supports a GSM architecture then the shared key (KE) is related to a GSM encryption key (Kc) and the authentication token (AUTN) is not needed.

18. The mobile network of Claim 16, wherein when said mobile operator supports an UMTS architecture then the shared key (KE) is related to an UMTS encryption/integrity key (CKIK) and the authentication token (AUTN) is needed.

19. The mobile network of Claim 16, wherein said mobile operator supports a 3GPP Generic Bootstrap Architecture.

## Patentansprüche

1. Verfahren zum Einrichten eines gemeinsamen Codes (KE) zwischen einem Mobilfunkgerät und einer Smartcard, wobei das Verfahren die folgenden Schritte aufweist:
Senden von dem Mobilfunkgerät einer ersten Nachricht zu einem Mobilfunkbetreiber, wobei der Mobilfunkbetreiber bei Empfang der ersten Nachricht Folgendes erzeugt:
einen verschlüsselten gemeinsamen Code (KE');
einen Zufallsaufforderungswert (RAND); und
falls vorhanden, ein Authentifizierungstoken (AUTN);
Empfangen an dem Mobilfunkgerät einer zweiten Nachricht von dem Mobilfunkbetreiber, wobei die zweite Nachricht Folgendes enthält:
den verschlüsselten gemeinsamen Code (KE');
den Zufallsaufforderungswert (RAND); und
falls vorhanden, das Authentifizierungstoken (AUTN); Entschlüsseln an dem Mobilfunkgerät des verschlüsselten gemeinsamen Codes (KE'), um den gemeinsamen Code (KE) zu bestimmen;
Senden von dem Mobilfunkgerät einer dritten Nachricht an die Smartcard, wobei die dritte Nachricht Folgendes enthält:
den Zufallsaufforderungswert (RAND); und
falls vorhanden, das Authentifizierungstoken (AUTN);
an der Smartcard Verwenden des Zufallsaufforderungswerts (RAND), und falls vorhanden, des Authentifizierungstokens (AUTN), um den gemeinsamen Code (KE) zu bestimmen.

2. Verfahren nach Anspruch 1, wobei der Mobilfunkbetreiber, das Mobilfunkgerät und die Smartcard in Übereinstimmung mit einem GSM-Standard oder einem UMTS-Standard konfiguriert sind.

3. Verfahren nach Anspruch 1, wobei die erste Nachricht Folgendes enthält:
eine Abonnementidentität (UserID); und
einen Codeidentifikator (KID) oder ein Zertifikat (CERT_t), wenn eine Endgeräte-Identität (TID) gleich dem Codeidentifikator (KID) ist.

4. Verfahren nach Anspruch 1, wobei die erste Nachricht Folgendes enthält:
eine Abonnementidentität (UserID);
eine Endgeräte-Identität (TID); und
einen Codeidentifikator (KID) oder ein Zertifikat (CERT_t).

5. Verfahren nach Anspruch 1, wobei die erste Nachricht ferner Folgendes aufweist:
Codeaustauschinformationen (Kx_t);
einen Zufalls-Einmalmarkierungscode oder Zeitstempelwert (N/T); und
einen Nachrichtauthentifizierungscode (MAC_t) oder eine digitale Signatur (SIG_t).

6. Verfahren nach Anspruch 1, wobei die zweite Nachricht ferner folgendes aufweist:
Codeaustauschinformationen (Kx_n);
eine Zufalls-Einmalmarkierungscode oder Zeitstempelwert (N/T);
ein Zertifikat (CERT_n); und
einen Nachrichtauthentifizierungscodes (MAC_n) oder eine digitale Signatur (SIG_n).

7. Verfahren nach Anspruch 1, wobei, wenn der Mobilfunkbetreiber, das Mobilfunkgerät und die Smartcard in Übereinstimmung mit einem GSM-Standard konfiguriert sind, der gemeinsame Code (KE) mit einem GSM-Verschlüsselungscode (Kc) verwandt ist und das Authentifizierungstoken (AUTN) nicht erforderlich ist.

8. Verfahren nach Anspruch 1, wobei, wenn der Mobilfunkbetreiber, das Mobilfunkgerät und die Smartcard in Übereinstimmung mit einem UMTS-Standard konfiguriert sind, der gemeinsame Code (KE) mit einem UMTS-Verschlüsselungs-/Integritätscode (CKIK) verwandt ist und das Authentifizierungstoken (AUTN) erforderlich ist.

9. Verfahren nach Anspruch 1, wobei der Mobilfunkbetreiber, das Mobilfunkgerät, die Smartcard in Übereinstimmung mit einer generischen Bootstraparchitektur 3GPP konfiguriert sind.

10. Verfahren nach Anspruch 1, wobei die erste Nachricht Folgendes enthält:
eine Abonnementidentität (UserID);
eine Endgeräte-Identität (IMEI);
einen Codeidentifikator (KID);
einen öffentlichen Diffie-Hellman-Code (g^{x});
einen Zufalls-Einmalmarkierungscode (N); und
einen Nachrichtenauthentifizierungscode (MAC_t).

11. Verfahren nach Anspruch 1, wobei die zweite Nachricht ferner Folgendes enthält:
einen öffentlichen Diffie-Hellman-Code (g^{y});
einen Zufalls-Einmalmarkierungscode; und
einen Nachrichtenauthentifizierungscode (MAC_n).

12. Einrichtung, die ein Mobilfunkgerät aufweist, und eine Smartcard, die einen Mobilfunkbetreiber verwendet, um das Einrichten eines gemeinsamen Codes (KE) zu unterstützen, der verwendet wird, um eine Schnittstelle zwischen dem Mobilfunkgerät und der Smartcard zu schützen, wobei das Mobilfunkgerät Folgendes aufweist:
Logik, die eine Anforderungsnachricht zu einem Mobilfunkbetreiber sendet und dann Folgendes empfängt:
einen verschlüsselten gemeinsamen Code (KE');
einen Zufallsaufforderungswert (RAND); und
falls vorhanden, ein Authentifizierungstoken (AUTN); und
Logik, die den verschlüsselten gemeinsamen Code (KE') entschlüsselt, um den gemeinsamen Code (KE) zu bestimmen;
Logik, die der Smartcard Folgendes sendet:
den Zufallsaufforderungswert (RAND); und
falls vorhanden, das Authentifizierungstoken (AUTN); und wobei die Smartcard Folgendes aufweist:
Logik, die Folgendes empfängt:
den Zufallsaufforderungswert (RAND); und
falls vorhanden, das Authentifizierungstoken (AUTN); und
Logik, die den gemeinsamen Code (KE) unter Einsatz des Zufallsaufforderungswerts (RAND) und, falls vorhanden, des Authentifizierungstokens (AUTN) bestimmt.

13. Mobilfunkgerät/Smartcard nach Anspruch 12, wobei, wenn der Mobilfunkbetreiber eine GSM-Architektur unterstützt, der gemeinsame Code (KE) mit einem GSM-Verschlüsselungscode (Kc) verwandt ist und das Authentifizierungstoken (AUTN) nicht erforderlich ist.

14. Mobilfunkgerät/Smartcard nach Anspruch 12, wobei, wenn der Mobilfunkbetreiber eine UMTS-Architektur unterstützt, der gemeinsame Code (KE) mit einem UMTS-Verschlüsselungs-/Integritätscode (CKIK) verwandt ist und das Authentifizierungstoken (AUTN) erforderlich ist.

15. Mobilfunkgerät/Smartcard nach Anspruch 12, wobei der Mobilfunkbetreiber eine generische Bootstraparchitektur 3GPP unterstützt.

16. Mobilfunknetzwerk, das Folgendes aufweist:
einem Knoten/eine Datenbank, die eine Anfragenachricht von einem Mobilfunkgerät empfängt und dann mindestens Folgendes bestimmt:
einen verschlüsselten gemeinsamen Code (KE');
einen Zufallsaufforderungswert (RAND); und
falls vorhanden, ein Authentifizierungstoken (AUTN);
wobei der Knoten/die Datenbank dem Mobilfunkgerät Folgendes sendet:
den verschlüsselten gemeinsamen Code (KE');
den Zufallsaufforderungswert (RAND); und
falls vorhanden, das Authentifizierungstoken (AUTN), wobei das Mobilfunkgerät den verschlüsselten gemeinsamen Code (KE') entschlüsselt, um einen gemeinsamen Code (KE) zu bestimmen, wobei das Mobilfunkgerät einer Smartcard den Zufallsaufforderungswert (RAND) sendet, und, falls bereitgestellt, das Authentifizierungstoken (AUTN), wobei die Smartcard den Zufallsaufforderungswert (RAND) und, falls bereitgestellt, das Authentifizierungstoken (AUTN) verwendet, um einen gemeinsamen Code (KE) zu bestimmen, wobei das Mobilfunkgerät und die Smartcard ihre gemeinsamen Codes (KEs) verwenden, um eine Schnittstelle zwischen einander zu schützen.

17. Mobilfunknetzwerk nach Anspruch 16, wobei, wenn der Mobilfunkbetreiber eine GSM-Architektur unterstützt, der gemeinsame Code (KE) mit einem GSM-Verschlüsselungscode (Kc) verwandt ist und das Authentifizierungstoken (AUTN) nicht erforderlich ist.

18. Mobilfunknetzwerk nach Anspruch 16, wobei, wenn der Mobilfunkbetreiber eine UMTS-Architektur unterstützt, der gemeinsame Code (KE) mit einem UMTS-Verschlüsselungs-/Integritätscode (CKIK) verwandt ist und das Authentifizierungstoken (AUTN) erforderlich ist.

19. Mobilfunknetzwerk nach Anspruch 16, wobei der Mobilfunkbetreiber eine generische Bootstraparchitektur 3GPP unterstützt.

## Revendications

1. Une méthode pour établir une clé partagée (KE) entre un dispositif mobile et une carte à puce, ladite méthode comprenant les étapes de :
envoi, à partir dudit dispositif mobile, d'un premier message à un opérateur mobile qui lors de la réception du premier message ledit opérateur mobile produit :
une clé partagée chiffrée (KE') ;
une valeur de demande d'accès aléatoire (RAND) ; et
si nécessaire, un jeton d'authentification (AUTN) ;
réception, au niveau dudit dispositif mobile, d'un deuxième message en provenance dudit opérateur mobile, dans lequel ledit deuxième message inclut :
la clé partagée chiffrée (KE') ;
la valeur de demande d'accès aléatoire (RAND) ; et
si présente, le jeton d'authentification (AUTN) ;
déchiffrement, au niveau dudit dispositif mobile, de la clé partagée chiffrée (KE') pour déterminer la clé partagée (KE) ;
envoi, à partir dudit dispositif mobile, d'un troisième message à ladite carte à puce, dans lequel ledit troisième message inclut :
la valeur de demande d'accès aléatoire (RAND) ; et
si présente, le jeton d'authentification (AUTN) ;
utilisation, au niveau de ladite carte à puce, de la valeur de demande d'accès aléatoire (RAND) et si présent du jeton d'authentification (AUTN) pour déterminer la clé partagée (KE).

2. La méthode selon la revendication 1, dans lequel ledit opérateur mobile, ledit dispositif mobile et ladite carte à puce sont configurés selon une norme GSM ou une norme UMTS.

3. La méthode selon la revendication 1, dans lequel ledit premier message inclut :
une identité d'abonnement (UserID) ; et
un identificateur de clé (KID) ou un certificat (CERT_t) quand une identité de terminal (TID) est égale à l'identificateur de clé (KID).

4. La méthode selon la revendication 1, dans lequel ledit premier message inclut :
une identité d'abonnement (UserID) ;
une identité de terminal (TID) ; et
un identificateur de clé (KID) ou un certificat (CERT_t).

5. La méthode selon la revendication 1, dans lequel ledit premier message inclut en outre au moins l'un de :
une information d'échange de clé (Kx_t) ;
une valeur d'instant aléatoire ou d'estampille temporelle (N/T) ; et
un code d'authentification de message (MAC_t) ou une signature numérique (SIG_t).

6. La méthode selon la revendication 1, dans lequel ledit deuxième message inclut en outre au moins l'un de :
une information d'échange de clé (Kx_n) ;
une valeur d'instant aléatoire ou d'estampille temporelle (N/T) ;
un certificat (CERT_n) ; et
un code d'authentification de message (MAC_n) ou une signature numérique (SIG_n).

7. La méthode selon la revendication 1, dans lequel, lorsque ledit opérateur mobile, ledit dispositif mobile et ladite carte à puce sont configurés selon une norme GSM, alors la clé partagée (KE) est liée à une clé de chiffrage GSM (Kc) et le jeton d'authentification (AUTN) n'est pas nécessaire.

8. La méthode selon la revendication 1, dans lequel, lorsque ledit opérateur mobile, ledit dispositif mobile et ladite carte à puce sont configurés selon une norme UMTS, alors la clé partagée (KE) est liée à une clé de chiffrage / intégrité UMTS (CK | IK) et le jeton d'authentification (AUTN) est nécessaire.

9. La méthode selon la revendication 1, dans lequel ledit opérateur mobile, ledit dispositif mobile, ladite carte à puce sont configurés selon une Architecture d'Amorçage Générique 3GPP.

10. La méthode selon la revendication 1, dans lequel ledit premier message inclut :
une identité d'abonnement (UserID) ;
une identité de terminal (IMEI) ;
un identificateur de clé (KID) ;
une clé publique de Diffie-Helman (g^{x}) ;
un instant aléatoire (N) ; et
un code d'authentification de message (MAC_t).

11. La méthode selon la revendication 1, dans lequel ledit deuxième message inclut en outre :
une clé publique de Diffie-Helman (g^{y}) ;
un instant aléatoire (N) ; et
un code d'authentification de message (MAC_n).

12. Agencement comprenant un dispositif mobile et une carte à puce qui utilisent un opérateur mobile pour aider à établir une clé partagée (KE) qui est utilisé pour protéger une interface entre ledit dispositif mobile et ladite carte à puce, dans lequel :
ledit dispositif mobile comprend :
une logique qui envoie un message de demande à un opérateur mobile et qui reçoit ensuite :
une clé partagée chiffrée (KE') ;
une valeur de demande d'accès aléatoire (RAND) ; et
si présente, un jeton d'authentification (AUTN) ; et
une logique qui déchiffre la clé partagée chiffrée (KE') pour déterminer la clé partagée (KE) ;
une logique qui envoie à ladite carte à puce ce qui suit :
la valeur de demande d'accès aléatoire (RAND) ; et
si présent, le jeton d'authentification (AUTN) ; et
ladite carte à puce comprenant :
une logique qui reçoit ce qui suit :
la valeur de demande d'accès aléatoire (RAND) ; et
si présent, le jeton d'authentification (AUTN) ; et
une logique qui détermine la clé partagée (KE) en utilisant la valeur de demande d'accès aléatoire (RAND) et si présent le jeton d'authentification (AUTN).

13. Dispositif mobile / carte à puce selon la revendication 12, dans lequel, lorsque ledit opérateur mobile supporte une architecture GSM alors la clé partagée (KE) est liée à une clé de chiffrage GSM (Kc) et le jeton d'authentification (AUTN) n'est pas nécessaire.

14. Dispositif mobile / carte à puce selon la revendication 12, dans lequel, lorsque ledit opérateur mobile supporte une architecture UMTS alors la clé partagée (KE) est liée à une clé de chiffrage / intégrité UMTS (CK | IK) et le jeton d'authentification (AUTN) est nécessaire.

15. Dispositif mobile / carte à puce selon la revendication 12, dans lequel ledit opérateur mobile supporte une Architecture d'Amorçage Générique 3GPP.

16. Réseau mobile comprenant :
un noeud / base de données qui reçoit un message de demande en provenance d'un dispositif mobile et détermine ensuite au moins ce qui suit :
une clé partagée chiffrée (KE') ;
une valeur de demande d'accès aléatoire (RAND) ; et
si nécessaire, un jeton d'authentification (AUTN) ;
ledit noeud / base de données envoie audit dispositif mobile ce qui suit :
la clé partagée chiffrée (KE') ;
la valeur de demande d'accès aléatoire (RAND) ; et
si présent, le jeton d'authentification (AUTN), dans lequel ledit dispositif mobile déchiffre la clé partagée chiffrée (KE') pour déterminer une clé partagée (KE), dans lequel ledit dispositif mobile envoie à une carte à puce la valeur de demande d'accès aléatoire (RAND) et si fourni le jeton d'authentification (AUTN), dans lequel ladite carte à puce utilise la valeur de demande d'accès aléatoire (RAND) et si fourni le jeton d'authentification (AUTN) pour déterminer une clé partagée (KE), dans lequel ledit dispositif mobile et ladite carte à puce utilisent leurs clés partagées (KEs) pour protéger une interface entre eux.

17. Réseau mobile selon la revendication 16, dans lequel, lorsque ledit opérateur mobile supporte une architecture GSM, alors la clé partagée (KE) est liée à une clé de chiffrage GSM (Kc) et le jeton d'authentification (AUTN) n'est pas nécessaire.

18. Réseau mobile selon la revendication 16, dans lequel, lorsque ledit opérateur mobile supporte une architecture UMTS, alors la clé partagée (KE) est liée à une clé de chiffrage / intégrité UMTS (CK | IK) et le jeton d'authentification (AUTN) est nécessaire.

19. Réseau mobile selon la revendication 16, dans lequel ledit opérateur mobile supporte une Architecture d'Amorçage Générique 3GPP.
